# EUROPÄISCHE PATENTSCHRIFT

(11) **EP 3 529 564 B1**
(45) Veröffentlichungstag und Bekanntmachung des Hinweises auf die Patenterteilung: **09.12.2020**
(21) Anmeldenummer: 17786896.5
(22) Anmeldetag: 17.10.2017
(51) Int. Cl.: G01D 5/14, F16D 1/00, F16D 11/00

(54) **SENSOREINRICHTUNG ZUR MESSUNG EINER LINEAR- ODER ROTATIONSBEWEGUNG EINES MESSOBJEKTS**
SENSOR DEVICE FOR MEASURING A LINEAR OR ROTATIONAL MOVEMENT OF A MEASUREMENT OBJECT
DISPOSITIF DE CAPTEURS DESTINÉ À LA MESURE D'UN MOUVEMENT LINÉAIRE OU ROTATIF D'UN OBJET DE MESURE

(30) Priorität: 19.10.2016 DE 102016119881
(43) Veröffentlichungstag der Anmeldung: 28.08.2019
(73) Patentinhaber: KNORR-BREMSE Systeme für Nutzfahrzeuge GmbH, 80809 München (DE)
(72) Erfinder: HUBER, Christian, 80937 München (DE); PRAMS, Stefan, 85716 Unterschleißheim (DE)
(86) Internationale Anmeldenummer: PCT/EP2017/076472
(87) Internationale Veröffentlichungsnummer: WO 2018/073247

(56) Entgegenhaltungen:
- JP-A- H05 187 456
- US-A- 4 901 014
- US-A1- 2016 141 940

## Beschreibung

Die Erfindung geht aus von einer Sensoreinrichtung zur Messung einer Linear- oder Rotationsbewegung eines Messobjekts gemäß Anspruch 1 sowie von einem Fahrzeug mit einer solchen Sensoreinrichtung gemäß Anspruch 11.

Solche Sensoreinrichtungen werden beispielsweise zur Messung von Linear- oder Rotationsbewegungen von bewegten Fahrzeugelementen eingesetzt, beispielsweise zur Messung eines Betätigungswinkels eines Fahrzeugpedals. Eine gattungsbildende Sensoreinrichtung wird in US 2016/0141940 A1 offenbart.

Der vorliegenden Erfindung liegt die Aufgabe zugrunde, eine Sensoreinrichtung der eingangs erwähnten Art derart weiter zu entwickeln, dass ihre Lebensdauer möglichst hoch ist. Weiterhin soll auch ein Fahrzeug mit einer solchen Sensoreinrichtung zur Verfügung gestellt werden.

Diese Aufgabe wird erfindungsgemäß durch die Merkmale von der Ansprüche 1 und 11 gelöst.

### Offenbarung der Erfindung

Die Erfindung geht aus von einer Sensoreinrichtung zur Messung einer Linear- oder Rotationsbewegung eines Messobjekts vor, beinhaltend wenigstens
a) ein Sensorelement, welches angeordnet und ausgebildet ist, um die Linear- oder Rotationsbewegung des Messobjekts direkt oder indirekt zu erfassen und um entsprechende Messsignale auszusteuern, wobei das Sensorelement ein Geberelement und ein sensitives Element aufweist und das Sensorelement eine Relativbewegung zwischen dem Geberelement und dem sensitiven Element erfasst,
b) eine elektronische Auswerteeinrichtung, welche ausgebildet ist, um die Messsignale des Sensorelements auszuwerten,
c) eine Lagereinrichtung,
d) eine mit dem Geberelement des Sensorelements gekoppelte, mittels der Lagereinrichtung wenigstens radial gelagerte erste Welle,
e) eine mit dem Messobjekt direkt oder indirekt koppelbare und mittels der Lagereinrichtung wenigstens radial gelagerte zweite Welle, wobei
f) die erste Welle und die zweite Welle koaxial und mittels einer lösbaren Verbindung miteinander drehgekoppelt sind, und wobei
g) die Lagereinrichtung eine Mittelachse und eine zylindrische Lagerfläche aufweist, welche in axialer Richtung parallel zur Mittelachse eine axiale Erstreckung und in radialer Richtung senkrecht zur Mittelachse einen Lagerflächen-Innendurchmesser aufweist, und wobei
h) die Verbindung eine erste, an einem Ende der ersten Welle ausgebildete axiale und/oder radiale Verzahnung und eine zweite, an einem Ende der zweiten Welle ausgebildete axiale und/oder radiale Verzahnung aufweist, wobei die erste Verzahnung und die zweite Verzahnung formschlüssig ineinandergreifen, und wobei
i) die erste Welle mit ihrem von der ersten Verzahnung weg weisenden anderen Ende und die zweite Welle mit ihrem von der zweiten Verzahnung weg weisenden anderen Ende jeweils aus der Lagerfläche axial herausragen.

Erfindungsgemäß ist vorgesehen, dass
j) die Verbindung in radialer Richtung gesehen innerhalb des Lagerflächen-Innendurchmessers und in axialer Richtung gesehen innerhalb der axialen Erstreckung der Lagerfläche und sowohl in axialer Richtung wie auch in radialer Richtung gesehen räumlich vollständig innerhalb der zylindrischen Lagerfläche der Lagereinrichtung angeordnet ist, wobei
k) die Verbindung wenigstens ein axiales Verbindungselement beinhalten, welches die erste Welle und die zweite Welle miteinander axial verbindet und welches durch eine Schraube gebildet wird.

Die Verbindung kann daher sowohl darin bestehen, dass sowohl die erste Welle wie auch die zweite Welle jeweils eine Axialverzahnung oder jeweils eine Radialverzahnung oder jeweils eine kombinierte Radial-/Axialverzahnung aufweisen. Axialverzahnung bedeutet, dass beispielsweise jeweils an einem Umfangsrand einer Stirnfläche des einen Endes der ersten Welle und der zweiten Welle jeweils Zähne gleichmäßig verteilt angeordnet sind und dann ineinander greifen. Radialverzahnung bedeutet, dass jeweils an einer äußeren Umfangsfläche an dem einen Ende der ersten Welle und an einer inneren Umfangsfläche an dem einen Ende der zweiten Welle jeweils Zähne gleichmäßig verteilt angeordnet sind und dann nach Art eines Vielnutprofils oder eines Kerbzahnprofils ineinander greifen.

Umgekehrt können auch jeweils an einer radial inneren Umfangsfläche an dem einen Ende der ersten Welle und an einer radial äußeren Umfangsfläche an dem einen Ende der zweiten Welle jeweils Zähne gleichmäßig verteilt angeordnet sein, um dann ineinander zu greifen.

In jedem Fall entsteht ein drehfester Formschluss zwischen der ersten Verzahnung und der zweiten Verzahnung. Durch den Formschluss der ersten Verzahnung und der zweiten Verzahnung wird daher eine Drehbewegung der zweiten, mit dem Messobjekt direkt oder indirekt gekoppelten Welle auf die erste Welle drehfest übertragen.

Dabei wird von der Sensoreinrichtung nicht zwangsweise lediglich eine Drehbewegung des mit der zweiten Welle gekoppelten Messobjekts erfasst. Vielmehr kann die Sensoreinrichtung auch eine lineare Bewegung des Messobjekts erfassen, wenn diese lineare Bewegung mittels eines Getriebes in eine Drehbewegung der zweiten Welle gewandelt wird.

Die erste Verzahnung und die zweite Verzahnung sind komplementär ausgebildet, d.h. dass ihre Zähne jeweils gleichen Abstand zueinander aufweisen und formschlüssig ineinander greifen können. Dabei ist jeglicher geometrischer Querschnitt von Verzahnung denkbar, auch etwa eckige und gerundete Querschnitte.

Die Verbindung in radialer Richtung gesehen innerhalb des Lagerflächen-Innendurchmessers und in axialer Richtung gesehen innerhalb der axialen Erstreckung der Lagerfläche angeordnet bedeutet, dass die erste Verzahnung wie auch die zweite Verzahnung in radialer Richtung gesehen vollständig innerhalb des Lagerflächen-Innendurchmessers und in axialer Richtung gesehen vollständig innerhalb der axialen Erstreckung der Lagerfläche angeordnet ist. Mit anderen Worten ist die als radiale und/oder als axiale Verzahnungsverbindung ausgeführte drehfeste Verbindung dann sowohl in axialer wie auch in radialer Richtung gesehen räumlich vollständig innerhalb der Lagerfläche der Lagereinrichtung angeordnet. Die Verbindung stellt dann einen drehenden Bestandteil wenigstens einer radialen Lagerung der ersten Welle und der zweiten Welle in der Lagereinrichtung dar, von welcher der stationäre Bestandteil die Lagerfläche der Lagereinrichtung ist.

Die Lagerfläche wird beispielweise durch eine radial innere Lagerschale eines Gleitlagers oder durch einen Innenring eines Wälzlagers gebildet, wobei das Gleitlager oder das Wälzlager dann eine Rotation der ersten Welle und der mit dieser mittels der Verbindung formschlüssig und drehfest verbundenen zweiten Welle in Bezug zu einer Lagerstelle ermöglicht, welche beispielsweise in oder an einem Gehäuse der Sensoreinrichtung angeordnet ist.

Dadurch ergibt sich zum einen der Vorteil, dass die Verbindungseinrichtung durch die Lagerfläche der Lagereinrichtung wenigstens radial abgestützt und dadurch stabilisiert wird. Weiterhin liegt die Verbindung dann in einem Bereich niedrigerer und homogenerer mechanischer Belastung, was im Hinblick auf Bruchlast und mechanischen Verschleiß vorteilhaft ist. Nicht zuletzt ist die Verbindung dann auch besser gegenüber Umwelteinflüssen wie Feuchtigkeit und Verschmutzung geschützt ist.

Durch die in den Unteransprüchen aufgeführten Maßnahmen sind vorteilhafte Weiterbildungen und Verbesserungen der Erfindung möglich.

Bevorzugt ist der Lagerschale bzw. dem Lagerflächen-Innendurchmesser einerseits und einem Außendurchmesser der ersten Welle bzw. der ersten Welle und der zweiten Welle bzw. einem Außendurchmesser der zweiten Welle andererseits eine Hülse zwischengeordnet. Das Material einer solchen Hülse kann dann im Hinblick auf Steifigkeit und Lagereigenschaften angepasst werden. Dabei kann die Hülse lose sein, sich mit der ersten und zweiten Welle mitdrehen oder mit der Lagerfläche verbunden sein.

Eine besonders gute Abstützung der Verbindung durch die Lagerfläche ergibt sich, wenn bevorzugt der Außendurchmesser der ersten Welle und der Außendurchmesser der zweiten Welle wenigstens im Bereich der Verbindung identisch sind.

Die Schraube ragt beispielsweise durch eine zentrale axiale Durchgangsöffnung der zweiten Welle hindurch und ist in eine an dem einen Ende der ersten Welle ausgebildete zentrale Gewindebohrung eingeschraubt, an welchem die erste Verzahnung ausgebildet ist.

Das Sensorelement ist zusammen mit der Auswerteeinrichtung insbesondere zur Messung eines Drehwinkels und/oder einer Drehgeschwindigkeit und/oder einer Drehbeschleunigung der ersten Welle ausgebildet.

Besonders bevorzugt ist die Lagereinrichtung bzw. die Lagerfläche in einer Durchgangsöffnung eines Gehäuses der Sensoreinrichtung angeordnet, in welche die zweite Welle von außen axial hineinragt, wobei die zweite Welle innerhalb des Gehäuses angeordnet ist. Bevorzugt ist auch die elektronische Auswerteeinrichtung der Sensoreinrichtung innerhalb des Gehäuses angeordnet.

Gemäß einer Weiterbildung ist die Lagerfläche in der Durchgangsöffnung des Gehäuses angeordnet ist oder wird von der Durchgangsöffnung getragen, beispielsweise in dem Fall, in welchem die Lagerfläche eine Lagerschale eines Gleitlagers oder einen Innenring eines Wälzlagers darstellt. Alternativ kann die Lagerfläche auch durch eine radial innere Umfangsfläche der Durchgangsöffnung selbst gebildet werden.

Das Sensorelement kann insbesondere ein Hall-Element beinhalten, von dem dann ein mit der ersten Welle mitdrehender Geber beispielsweise als Magnet ausgeführt ist, welcher sich gegenüber einem stationären, im Gehäuse angeordneten Hall-Chip dreht, welcher dann das sensitive Element darstellt.

Die Sensoreinrichtung ist weiterhin bevorzugt Bestandteil einer Niveauregulierung und zur Messung des Niveaus eines Aufbaus gegenüber einem Fahrwerk eines luftgefederten Fahrzeugs ausgebildet, wobei der Aufbau das Messobjekt darstellt und die zweite Welle mit einem an dem Aufbau angelenkten Hebel verbunden ist. Der Hebel ist dann Teil eines Getriebes, welches Niveauänderungen des Aufbaus in entsprechende Drehbewegungen des Hebels wandelt. Die Drehbewegung des Hebels, welche dann mittels der Verbindung auf die erste Welle drehfest übertragen und vom Sensorelement erfasst wird, stellt dann ein Maß für die Niveauänderung des Aufbaus dar.

Die Erfindung betrifft auch ein Fahrzeug mit einer oben beschriebenen Sensoreinrichtung. In diesem Fall kann das Fahrzeug ein elektronisches Steuergerät aufweisen, welche abhängig von von der elektronischen Auswerteeinrichtung auf der Basis der Messsignale erzeugten Sensorsignalen wenigstens einen Aktuator betätigt, insbesondere eine elektro-pneumatische Ventileinrichtung zur Be- oder Entlüftung von Luftfederbälgen einer Luftfederungseinrichtung im Rahmen der Niveauregulierung.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Identische bzw. gleich wirkende Bauteile und Baugruppen sind in unterschiedlichen Ausführungsformen jeweils mit denselben Bezugszahlen bezeichnet.

Nachstehend ist ein Ausführungsbeispiel der Erfindung in der Zeichnung dargestellt und in der nachfolgenden Beschreibung näher erläutert. In der Zeichnung zeigt
- Fig.1: eine stark schematisierte Querschnittsdarstellung durch ein Gehäuse einer Sensoreinrichtung gemäß einer bevorzugten Ausführungsform der Erfindung;
- Fig.2: eine Querschnittsdarstellung entlang der Linie II-II von Fig.1;

### Beschreibung des Ausführungsbeispiels

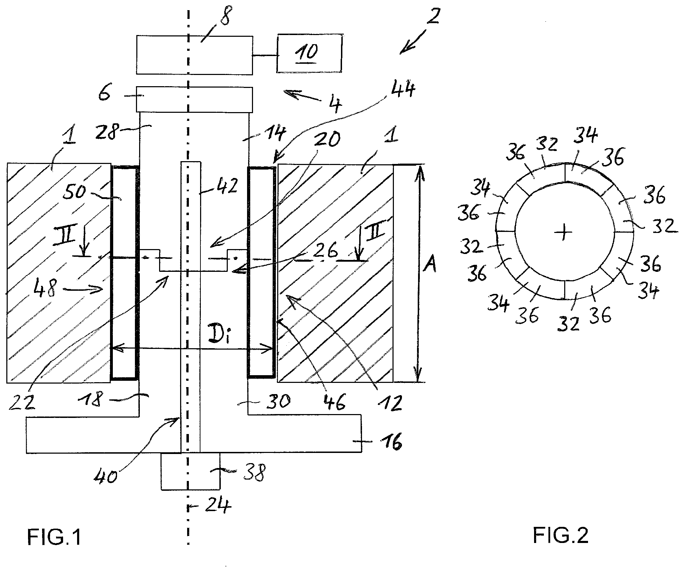

In **Fig.1** ist eine stark schematisierte Querschnittsdarstellung durch ein Gehäuse 1 einer Sensoreinrichtung 2 gemäß einer bevorzugten Ausführungsform der Erfindung gezeigt, wobei die Sensoreinrichtung 2 beispielsweise Bestandteil einer aus Maßstabsgründen nicht gezeigten Niveauregulierung ist, welcher neben der Sensoreinrichtung 2 ein elektronisches Steuergerät sowie eine elektro-pneumatische Ventileinrichtung zur Be- oder Entlüftung von Luftfederbälgen einer Luftfederungseinrichtung beinhaltet, welche zwischen einem Aufbau und einem Fahrwerk eines Fahrzeugs angeordnet ist, insbesondere eines Nutzfahrzeugs.

Die Sensoreinrichtung 2 dient dann hier beispielsweise dazu, ein das aktuelle Ist-Niveau des Aufbaus in Bezug zum Fahrwerk repräsentierendes Signal in das elektronische Steuergerät einzusteuern, damit dort mittels eines Soll-Istwert-Abgleichs ein Stellsignal für die elektropneumatische Ventileinrichtung erzeugt wird, um durch Be- oder Entlüftung der Luftfederbälge das gewünschte Soll-Niveau herzustellen. Eine solche Niveauregulierung in einer Luftfederungseinrichtung ist hinlänglich bekannt. Deshalb soll hier nicht weiter darauf eingegangen werden.

Die Sensoreinrichtung 2 umfasst ein Sensorelement 4, hier beispielsweise ein Hall-Element, wobei das Sensorelement ein Geberelement 6 und ein sensitives Element 8 aufweist und das Sensorelement 4 eine Relativbewegung zwischen dem Geberelement 6 und dem sensitiven Element 8 erfasst.

Weiterhin umfasst die Sensoreinrichtung 2 eine elektronische Auswerteeinrichtung, welche ausgebildet ist, um die Messsignale des Sensorelements 4 auszuwerten, sowie eine mit dem Geberelement 6 des Sensorelements 4 drehfest gekoppelte, mittels einer Lagereinrichtung 12 im Gehäuse 1 rotatorisch gelagerte erste Welle 14 und eine mit dem Aufbau des Fahrzeugs hier beispielsweise über einen Hebel 16 eines Hebelgetriebes gekoppelte und mittels der Lagereinrichtung 12 rotatorisch gelagerte zweite Welle 18.

Dabei sind ein Ende 20 der ersten Welle 14 und ein Ende 22 der zweiten Welle 18 in Bezug auf eine mit der Lagereinrichtung 12 gemeinsame Dreh- oder Mittelachse 24 koaxial angeordnet und mittels einer lösbaren Verbindung 26 miteinander drehfest gekoppelt. Der Außendurchmesser der ersten Welle 14 und der Außendurchmesser der zweiten Welle 18 sind wenigstens im Bereich der lösbaren Verbindung 26, d.h. im Bereich der einen Enden 20, 22 der ersten Welle 14 und der zweiten Welle 18 bevorzugt identisch.

Das Geberelement 6 des Sensorelements 4, beispielsweise in Form eines Magneten ist an dem anderen Ende 28 der ersten Welle 14 angeordnet, welches von dem einen Ende 20 weg weist. Weiterhin ist mit dem von dem einen Ende 22 weg weisenden anderen Ende 30 der zweiten Welle 18 der Hebel 16 drehfest verbunden.

Die lösbare Verbindung 26 beinhaltet eine erste, an dem einem Ende 20 der ersten Welle 14 ausgebildete und beispielsweise axiale Verzahnung 32 und eine zweite, an dem einem Ende 22 der zweiten Welle 18 ausgebildete beispielsweise axiale Verzahnung 34, wobei die erste axiale Verzahnung 32 und die zweite axiale Verzahnung 34 komplementär ausgebildet sind und formschlüssig ineinandergreifen. Wie am besten anhand von **Fig.2** zu sehen, welche eine Querschnittsdarstellung von **Fig.1** entlang der Linie II-II darstellt, sind jeweils an einem Umfangsrand einer Stirnfläche des einen Endes 20 der ersten Welle 14 und des einen Endes 22 der zweiten Welle 18 Zähne 36 über den Umfang gleichmäßig verteilt angeordnet und greifen ineinander. Die Stirnflächen der beiden Wellen 14, 18, an denen jeweils Zähne 36 angeordnet sind, liegen einander gegenüber.

Der Formschluss der beiden axialen Verzahnungen 32, 34 wird hier beispielsweise dadurch gesichert, dass eine Schraube 38 durch eine zentrale axiale Durchgangsöffnung 40 in der zweiten Welle 18 hindurchragt und in eine an dem einen Ende 20 der ersten Welle 14 ausgebildete zentrale Gewindebohrung 42 eingeschraubt ist, an welchem die erste axiale Verzahnung 32 ausgebildet ist.

Die erste Welle 14 weist dann mit ihrem von der ersten axialen Verzahnung 32 weg weisenden anderen Ende 28 und die zweite Welle 18 mit ihrem von der zweiten axialen Verzahnung 34 weg weisenden anderen Ende 30 axial aus einer Lagerfläche 46 der Lagereinrichtung 12 heraus, welche in einer Durchgangsöffnung 44 des Gehäuses 1 angeordnet oder gehalten ist.

Die Lagerfläche 46 wird hier beispielweise durch eine radial innere Lagerschale eines Gleitlagers 48 gebildet, welche in der Durchgangsöffnung 44 des Gehäuses 1 drehfest und axialfest gehalten ist. Den anderen Partner der Gleitlagerung bilden dann die erste Welle 14 und die zweite Welle 18 wie auch deren Verbindung 26 miteinander. Das Gleitlager 48 ermöglicht dann eine Rotation der ersten Welle 14 und der mit dieser mittels der Verbindung 26 formschlüssig und drehfest verbundenen zweiten Welle 18 in Bezug zu einer Lagerstelle, welche in der Durchgangsöffnung 44 des Gehäuses 1 der Sensoreinrichtung 2 angeordnet ist. Die Lagerfläche 46 bzw. hier die radial innere Lagerschale des Gleitlagers 48 ist in einer radial inneren Umfangsfläche der Durchgangsbohrung 44 angeordnet oder wird von dieser getragen. Die Lagerfläche 46, hier insbesondere die radial innere Lagerschale des Gleitlagers 48 weist einen Lagerflächen-Innendurchmesser Di sowie in axialer Richtung gesehen eine axiale Erstreckung A auf, welche hier beispielsweise im Wesentlichen genauso groß wie die axiale Erstreckung der Durchgangsöffnung 44 im Gehäuse 1 ist.

Die lösbare Verbindung 26 in Form der axial ineinander greifenden Verzahnungen 32, 34 der ersten Welle 14 und der zweiten Welle 18 ist in radialer Richtung gesehen innerhalb des Lagerflächen-Innendurchmessers Di, im vorliegenden Fall des Lagerschalen-Innendurchmessers Di und in axialer Richtung gesehen innerhalb der axialen Erstreckung A der Lagerfläche 46 angeordnet.

Weiterhin kann der Lagerfläche 46 einerseits und der ersten Welle 14 und der zweiten Welle 18 andererseits im Bereich der Verbindung 26 eine Hülse 50 zwischengeordnet sein. Dabei kann die Hülse 50 lose sein, sich mit der ersten und zweiten Welle 14, 18 mitdrehen oder mit der Lagerfläche 46 drehfest und/oder axialfest verbunden sein. Durch eine, hier nicht gezeigte Axiallagerung können die erste Welle 14 und die zweite Welle 18 zusätzlich axial gelagert sein.

Anstatt durch axiale Verzahnungen 32, 34 wie hier beschrieben, kann die Verbindung aber auch durch eine reine Radialverzahnung oder eine kombinierte Axial-/Radialverzahlung gebildet werden. Radialverzahnung bedeutet, dass jeweils an einer äußeren Umfangsfläche des einen Endes 20 der ersten Welle 14 und an einer inneren Umfangsfläche des einen Endes 22 der zweiten Welle 18 jeweils Zähne gleichmäßig verteilt angeordnet sind und dann nach Art eines Vielnutprofils oder eines Kerbzahnprofils ineinander greifen. Umgekehrt können auch jeweils an einer radial inneren Umfangsfläche des einen Endes 20 der ersten Welle 14 und an einer radial äußeren Umfangsfläche des einen Endes 22 der zweiten Welle 18 jeweils Zähne gleichmäßig verteilt angeordnet sein, um dann ineinander zu greifen.

### BEZUGSZEICHENLISTE

- 1: Gehäuse
- 2: Sensoreinrichtung
- 4: Sensorelement
- 6: Geberelement
- 8: sensitives Element
- 10: Auswerteeinrichtung
- 12: Lagereinrichtung
- 14: erste Welle
- 16: Hebel
- 18: zweite Welle
- 20: ein Ende
- 22: ein Ende
- 24: Mittelachse
- 26: Verbindung
- 28: anderes Ende
- 30: anderes Ende
- 32: erste Verzahnung
- 34: zweite Verzahnung
- 36: Zähne
- 38: Schraube
- 40: Durchgangsöffnung
- 42: Gewindebohrung
- 44: Durchgangsöffnung
- 46: Lagerfläche
- 48: Gleitlager
- 50: Hülse

## Patentansprüche

1. Sensoreinrichtung (2) zur Messung einer Linear- oder Rotationsbewegung eines Messobjekts, beinhaltend wenigstens
a) ein Sensorelement (4), welches angeordnet und ausgebildet ist, um die Linear- oder Rotationsbewegung des Messobjekts direkt oder indirekt zu erfassen und um entsprechende Messsignale auszusteuern, wobei das Sensorelement (4) ein Geberelement (6) und ein sensitives Element (8) aufweist und das Sensorelement (4) eine Relativbewegung zwischen dem Geberelement (6) und dem sensitiven Element (8) erfasst,
b) eine elektronische Auswerteeinrichtung (10), welche ausgebildet ist, um die Messsignale des Sensorelements (4) auszuwerten,
c) eine Lagereinrichtung (12),
d) eine mit dem Geberelement (6) des Sensorelements (4) gekoppelte, mittels der Lagereinrichtung (12) gelagerte erste Welle (14),
e) eine mit dem Messobjekt direkt oder indirekt koppelbare und mittels der Lagereinrichtung gelagerte zweite Welle (18), wobei
f) die erste Welle (14) und die zweite Welle (18) koaxial und mittels einer lösbaren Verbindung (26) miteinander drehgekoppelt sind, und wobei
g) die Lagereinrichtung (12) eine Mittelachse (24) und eine zylindrische Lagerfläche (46) aufweist, welche in axialer Richtung parallel zur Mittelachse (24) eine axiale Erstreckung (A) und in radialer Richtung senkrecht zur Mittelachse (24) einen Lagerflächen-Innendurchmesser (Di) aufweist, und wobei
h) die Verbindung (26) eine erste, an einem Ende (20) der ersten Welle (14) ausgebildete axiale und/oder radiale Verzahnung (32) und eine zweite, an einem Ende (22) der zweiten Welle (18) ausgebildete axiale und/oder radiale Verzahnung (34) aufweist, wobei die erste Verzahnung (32) und die zweite Verzahnung (34) formschlüssig ineinandergreifen, wobei
i) die erste Welle (14) mit ihrem von der ersten Verzahnung (32) weg weisenden anderen Ende (28) und die zweite Welle (18) mit ihrem von der zweiten Verzahnung (34) weg weisenden anderen Ende (30) jeweils aus der Lagerfläche (46) axial herausragen, **dadurch gekennzeichnet, dass**
j) die Verbindung (26) in radialer Richtung gesehen innerhalb des Lagerflächen-Innendurchmessers (Di) und in axialer Richtung gesehen innerhalb der axialen Erstreckung (A) der Lagerfläche (46) und sowohl in axialer Richtung wie auch in radialer Richtung gesehen räumlich vollständig innerhalb der zylindrischen Lagerfläche (46) der Lagereinrichtung (12) angeordnet ist, wobei
k) die Verbindung (26) wenigstens ein axiales Verbindungselement (38) beinhaltet, welches die erste Welle (14) und die zweite Welle (18) miteinander axial verbindet und welches durch eine Schraube gebildet wird.

2. Sensoreinrichtung nach Anspruch 1, **dadurch gekennzeichnet, dass** sie eine Hülse (50) aufweist, welche der Lagerfläche (46) einerseits und der ersten Welle (14) und der zweiten Welle (18) andererseits zwischengeordnet ist.

3. Sensoreinrichtung nach Anspruch 1 oder 2, **dadurch gekennzeichnet, dass** der Außendurchmesser der ersten Welle (14) und der Außendurchmesser der zweiten Welle (18) wenigstens im Bereich der Verbindung (26) identisch sind.

4. Sensoreinrichtung nach einem der vorhergehenden Ansprüche, **dadurch gekennzeichnet, dass** die Lagerfläche (46) durch eine radial innere Lagerschale eines Gleitlagers (48) oder durch einen Innenring eines Wälzlagers gebildet wird.

5. Sensoreinrichtung nach einem der vorhergehenden Ansprüche, **dadurch gekennzeichnet, dass** das Sensorelement (4) zusammen mit der Auswerteeinrichtung zur Messung eines Drehwinkels und/oder einer Drehgeschwindigkeit und/oder einer Drehbeschleunigung der ersten Welle (14) ausgebildet ist.

6. Sensoreinrichtung nach einem der vorhergehenden Ansprüche, **dadurch gekennzeichnet, dass** sie ein Gehäuse (1) aufweist, wobei die Lagereinrichtung (12) in einer Durchgangsöffnung (44) des Gehäuses (1) der Sensoreinrichtung (2) angeordnet ist, in welche die zweite Welle (18) von außen axial hineinragt, wobei die zweite Welle (18) innerhalb des Gehäuses (1) angeordnet ist.

7. Sensoreinrichtung nach Anspruch 6, **dadurch gekennzeichnet, dass** die elektronische Auswerteeinrichtung (10) innerhalb des Gehäuses (1) angeordnet ist.

8. Sensoreinrichtung nach Anspruch 6 oder 7, **dadurch gekennzeichnet, dass** die Lagerfläche (46) in der Durchgangsöffnung (44) des Gehäuses angeordnet ist oder von dieser getragen wird.

9. Sensoreinrichtung nach einem der vorhergehenden Ansprüche, **dadurch gekennzeichnet, dass** das Sensorelement (4) ein Hall-Element beinhaltet.

10. Sensoreinrichtung nach einem der vorhergehenden Ansprüche, **dadurch gekennzeichnet, dass** sie zur Messung des Niveaus eines Aufbaus gegenüber einem Fahrwerk eines luftgefederten Fahrzeugs ausgebildet ist, wobei der Aufbau das Messobjekt darstellt und die zweite Welle (18) mit einem an dem Aufbau angelenkten Hebel (16) der Sensoreinrichtung verbunden ist.

11. Fahrzeug mit einer Sensoreinrichtung (2) nach einem der vorhergehenden Ansprüche.

12. Fahrzeug nach Anspruch 11, **dadurch gekennzeichnet, dass** es ein elektronisches Steuergerät aufweist, welche abhängig von von der elektronischen Auswerteeinrichtung (10) auf der Basis der Messsignale erzeugten Sensorsignalen wenigstens einen Aktuator betätigt.

## Claims

1. Sensor device (2) for measuring a linear or rotational movement of a measurement object, comprising at least the following:
a) a sensor element (4) which is designed and arranged to detect the linear or rotational movement of the measurement object directly or indirectly, and to generate corresponding measurement signals, wherein the sensor element (4) comprises a transmitter element (6) and a sensitive element (8) and the sensor element (4) detects a relative movement between the transmitter element (6) and the sensitive element (8),
b) an electronic evaluation device (10), which is designed to evaluate the measurement signals from the sensor element (4),
c) a bearing device (12),
d) a first shaft (14) coupled to the transmitter element (6) of the sensor device (4) and mounted by means of the bearing device (12),
e) a second shaft (18) that can be coupled directly or indirectly to the measurement object and which is mounted by means of the bearing device,
wherein
f) the first shaft (14) and the second shaft (18) are rotationally coupled to one another coaxially and by means of a releasable connection (26), and wherein
g) the bearing device (12) has a central axis (24) and comprises a cylindrical bearing surface (46), which has an axial extension (A) parallel to the said central axis (24) in the axial direction and a bearing surface internal diameter (Di) perpendicular to the central axis (24) in the radial direction, and wherein
h) the connection (26) has at one end (20) of the first shaft (14) axially and/or radially formed first teeth (32) and at one end (22) of the second shaft (18) axially and/or radially formed second teeth (34), and the first teeth (32) and second teeth (34) engage in one another with interlock, wherein
i) the first shaft (14), at its other end (28), which faces away from the first teeth (32), and the second shaft (18), at its other end (30), which faces away from the second teeth (34), in each case project axially out of the bearing surface (46), **characterised in that**
j) viewed in the radial direction, the connection (26) is arranged within the bearing surface internal diameter (Di), and viewed in the axial direction it is arranged within the axial extension (A) of the bearing surface (46), and viewed in both the axial and radial directions it is spatially completely within the cylindrical bearing surface (46) of the bearing device (12), wherein
k) the connection (26) comprises at least one axial connecting element (38), which connects the first shaft (14) and the second shaft (18) axially to one another, and which is in the form of a screw.

2. Sensor device according to Claim 1, **characterised in that** it comprises a sleeve (50), which is interposed between the bearing surface (46) on the one hand and the first shaft (14) and second shaft (18) on the other hand.

3. Sensor device according to Claims 1 or 2, **characterised in that** the outer diameter of the first shaft (14) and the outer diameter of the second shaft (18) are identical, at least in the area of the connection (26).

4. Sensor device according to any of the preceding claims, **characterised in that** the bearing surface (46) is formed by a radially internal bearing shell of a slide bearing (48) or by an inner ring of a roller bearing.

5. Sensor device according to any of the preceding claims, **characterised in that** the sensor element (4), together with the evaluation device, are designed to measure a rotation angle and/or a rotation speed and/or a rotation acceleration of the first shaft (14).

6. Sensor device according to any of the preceding claims, **characterised in that** it comprises a housing (1), wherein the bearing device (12) is arranged in a through-going opening (44) of the housing (1) of the sensor device (2), into which the second shaft (18) extends axially in from the outside, so that the second shaft (18) is arranged inside the housing (1).

7. Sensor device according to Claim 6, **characterised in that** the electronic evaluation device (10) is arranged inside the housing (1).

8. Sensor device according to Claims 6 or 7, **characterised in that** the bearing surface (46) is arranged in the said through-going opening (44) of the housing, or is supported thereby.

9. Sensor device according to any of the preceding claims, **characterised in that** the sensor element (4) comprises a Hall-effect element.

10. Sensor device according to any of the preceding claims, **characterised in that** it is designed to measure the level of an auto body relative to a chassis of an air-sprung vehicle, wherein the auto body is the measurement object and the second shaft (18) is connected to a lever (16) of the sensor device articulated to the body.

11. Vehicle with a sensor device (2) according to any of the preceding claims.

12. Vehicle according to Claim 11, **characterised in that** it comprises an electronic control unit which, depending on the sensor signals generated by the electronic evaluation device (10) on the basis of the measurement signals, actuates at least one actuator.

## Revendications

1. Dispositif (2) de capteur pour la mesure d'un mouvement linéaire ou de rotation d'un objet à mesurer, comportant au moins
a) un élément (4) de capteur, qui est disposé et constitué pour détecter directement ou indirectement le mouvement linéaire ou de rotation de l'objet à mesurer et pour émettre des signaux de mesure correspondants, l'élément (4) de capteur ayant un élément (6) de transmetteur et un élément (8) sensible et l'élément (4) de capteur détectant un mouvement relatif entre l'élément (6) de transmetteur et l'élément (8) sensible,
b) un dispositif (10) électronique d'exploitation, qui est constitué pour exploiter les signaux de mesure de l'élément (4) de capteur,
c) un dispositif (12) de palier,
d) un premier arbre (14), accouplé à l'élément (6) de transmetteur de l'élément (4) de capteur et supporté au moyen du dispositif (12) de palier,
e) un deuxième arbre (18) pouvant être accouplé direction ou indirectement à l'objet à mesurer et supporté au moyen du dispositif de palier, dans lequel
f) le premier arbre (14) et le deuxième arbre (18) sont coaxiaux et sont accouplés en rotation entre eux au moyen d'une liaison (26) amovible, et dans lequel
g) le dispositif (12) de palier a un axe (24) médian et une surface (46) cylindrique de palier, qui a, dans une direction axiale parallèle à l'axe (24) médian, une étendue (A) axiale, et dans une direction radiale perpendiculaire à l'axe (24) médian, un diamètre (Di) intérieur de surface de palier, et dans lequel
h) la liaison (26) a une première denture (32) axiale et/ou radiale, constituée à un bout (20) du premier arbre (14), et une deuxième denture (34) axiale et/ou radiale, constituée à un bout (22) du deuxième arbre (18), la première denture (32) et la deuxième denture (34) s'interpénétrant à complémentarité de forme, dans lequel
i) le premier arbre, par son autre bout (28), loin de la première denture (32), et le deuxième arbre (18), par son autre bout (30), loin de la deuxième denture (34), font saillie axialement chacun de la surface (46) de palier, **caractérisé en ce que**
j) la liaison (26) est disposée, considéré dans la direction radiale, à l'intérieur du diamètre (Di) intérieur de la surface de palier et, considéré dans la direction axiale, à l'intérieur de l'étendue (A) axiale de la surface (46) de palier et, considéré à la fois dans la direction axiale et dans la direction radiale, dans l'espace complètement dans la surface (46) cylindrique de palier du dispositif (12) de palier, dans lequel
k) la liaison (26) comporte au moins un élément (38) axial de liaison, qui relie entre eux axialement le premier arbre (14) et le deuxième arbre (18) et qui est formé par une vis.

2. Dispositif de capteur suivant la revendication 1, **caractérisé en ce qu'**il a un manchon, qui est disposé entre la surface (46) de palier d'une part et le premier arbre (14) et le deuxième arbre (18) d'autre part.

3. Dispositif de capteur suivant la revendication 1 ou 2, **caractérisé en ce que** le diamètre extérieur du premier arbre (14) et le diamètre extérieur du deuxième arbre (18) sont les mêmes, au moins dans la partie de la liaison (26).

4. Dispositif de capteur suivant l'une des revendications précédentes, **caractérisé en ce que** la surface (46) de palier est formée d'un coussinet intérieur radialement d'un palier (48) lisse ou d'une bague intérieure d'un palier à roulement.

5. Dispositif de capteur suivant l'une des revendications précédentes, **caractérisé en ce que** l'élément (4) de capteur est constitué, ensemble avec le dispositif d'exploitation, pour la mesure d'un angle de rotation et/ou d'une vitesse de rotation et/ou d'une accélération de rotation du premier arbre (14).

6. Dispositif de capteur suivant l'une des revendications précédentes, **caractérisé en ce qu'**il a un boîtier (1), le dispositif (12) de palier étant disposé dans une ouverture (44) de passage du boîtier (1) du dispositif (1) de capteur, ouverture dans laquelle le deuxième arbre (18) pénètre axialement de l'extérieur, le deuxième arbre (18) étant disposé à l'intérieur du boîtier (1).

7. Dispositif de capteur suivant la revendication 6, **caractérisé en ce que** le dispositif (10) électronique d'exploitation est disposé à l'intérieur du boîtier (1).

8. Dispositif de capteur suivant la revendication 6 ou 7, **caractérisé en ce que** la surface (46) de palier est disposée dans l'ouverture (44) de passage du boîtier ou est portée par celle-ci.

9. Dispositif de capteur suivant l'une des revendications précédentes, **caractérisé en ce que** l'élément (4) de capteur comportant un élément Hall.

10. Dispositif de capteur suivant l'une des revendications précédentes, **caractérisé en ce qu'**il est constitué pour la mesure du niveau d'une structure par rapport à un châssis d'un véhicule à suspension pneumatique, la structure représentant l'objet à mesurer et le deuxième arbre (18) étant relié à un levier (16), articulé à la structure, du dispositif de capteur.

11. Véhicule ayant un dispositif (2) de capteur suivant l'une des revendications précédentes.

12. Véhicule suivant la revendication 11, **caractérisé en ce qu'**il a un appareil électronique de commande, qui, en fonction de signaux de capteur produits par le dispositif (10) électronique d'exploitation sur la base des signaux de mesure, actionne un actionneur.
